**Europäisches Patentamt**

**European Patent Office**

**Office européen des brevets**

(19)

(11) Veröffentlichungsnummer: **0 306 054 B1**

# EUROPÄISCHE PATENTSCHRIFT

(12)

(45) Veröffentlichungstag der Patentschrift:
**12.06.91 Patentblatt 91/24**

(51) Int. Cl.⁵: **C02F 3/02, C02F 3/10,** **C02F 3/12**

(21) Anmeldenummer: **88114410.9**

(22) Anmeldetag: **03.09.88**

(54) **Anlage zur aeroben biologischen Reinigung von schadstoffhaltigem Wasser.**

(30) Priorität: **03.09.87 DE 3729398**
**04.11.87 DE 3737309**

(43) Veröffentlichungstag der Anmeldung:
**08.03.89 Patentblatt 89/10**

(45) Bekanntmachung des Hinweises auf die
Patenterteilung:
**12.06.91 Patentblatt 91/24**

(84) Benannte Vertragsstaaten:
**AT BE CH DE ES FR GB GR IT LI LU NL SE**

(56) Entgegenhaltungen:
**EP-A- 0 077 848**
**EP-A- 0 193 007**
**DE-A- 3 402 697**
**DE-A- 3 417 550**
**DE-A- 3 601 669**

(73) Patentinhaber: **TECON GMBH**
**Am Kunstgraben 8**
**W-3392 Clausthal-Zellerfeld (DE)**

(72) Erfinder: **Die Erfinder haben auf ihre Nennung**
**verzichtet**

(74) Vertreter: **Fitzner, Ulrich, Dr.**
**Am Eichförstchen 2a**
**W-4030 Ratingen 4 (DE)**

## Beschreibung

Gegenstand der Erfindung ist eine Anlage zur aeroben biologischen Reinigung von schadstoffhaltigem Wasser, welche aus einem zweistufigen Submers-Reaktor und einem Sedimentationsbecken besteht.

Für die Entfernung von Schadstoffen aus Abwässern sind biologische Verfahren bekannt, die in flachen, offenen Belebungsbecken und Sedimentationsbecken durchgeführt werden. Die Nachteile dieser Anlagen sind die Geruchsbelästigung, die Lärmbelästigung, der große Platzbedarf und hohe Investitions- und Energiekosten.

Aus der Firmenschrift der Firma Degussa AG "Activated carbon for environmental protection" ist ein Verfahren zur aeroben biologischen Reinigung von Abwasser bekannt, das aus einer Verreinigungs-, einer Belebungs-, einer Filtrations- und Sedimentationsstufe besteht, ohne daß hier nähere konstruktive Einzelheiten der Anlage geschildert werden.

Die CH-A 661 264 schildert eine Reinigungsanlage, die nach dem Überlaufprinzip arbeitet. Hierbei sind Belüftungs- und Festbettteil durch entsprechende Einbauten voneinander getrennt. Durch die Belüftung über Druckluftplatten wird das Wasser im Belüftungsteil nach oben getrieben, wo es über das obere Ende der Trennwand zum Festbett überläuft und durch dieses von oben nach unten durchsickert. Eine ähnlich arbeitende Anlage ist auch in der US-A 3 468 795 beschrieben.

Weiterhin ist bekannt, Abwasser in hohen zylindrischen Türmen oder tiefen Schächten ähnlich einer Blasensäule zu reinigen. Der Raumbedarf dieser Anlage ist verhältnismäßig groß. Dabei erfordern die großen Bauvolumina entsprechend hohe Investitions- und Energiekosten. Weitere Anlagen sind in der einschlägigen Literatur beschrieben (vgl. beispielsweise Präve B. : Handbuch der Biotechnologie, Wiesbanden 1982 ; Rehm H.J. : Industrielle Mikrobiologie, 2. Aufl., Berlin-Heidelberg-New York 1981 ; Fritsche W. : Umweltmikrobiologie Berlin 1985 ; Dohnen K. : Biotechnologie Frankfurt 1983).

In der DE-A 31 08 629 wird eine Abwasseraufbereitungsanlage beschrieben, bei der in einem vertikalen zylindrischen Außenrohr mit einem inneren Strömungsleitungsrohr das Abwasser mittels einer Pumpe umgewälzt wird. Dabei wird das abgepumpte Abwasser dem inneren Strömungsleitrohr, daß das Flüssigkeitsniveau der Aufwärtsstromkammer überragt, von oben zugeführt. Außerdem wird über ein Gebläse in das Strömungsleitrohr sauerstoffhaltiges Gas eingespeist. Um die Lösungsfähigkeit des Abwassers für Sauerstoff zu erhöhen, sollen die beiden, die Umwälzkammern bildenden Außen- und Innenrohre bis zu einer Tiefe von 100 m führen. Hieraus ist ersichtlich, welche Dimensionen eine solche Anlage aufweist. Weil es sich um eine offene Anlage handelt, sind Geruchsbelästigungen nicht auszuschließen.

Aus der EP-A-0003547 ist ein geschlossener Reaktor zur Abwasserreinigung bekannt, der ein inneres Strömungsrohr aufweist, in das mittels einer Düse Abwasser und Luft eingebracht werden. Aus der EP-B 0 130 499 ist ferner ein Gerät zur biologischen Abwasserreinigung bekannt, das aus seinem geschlossenen Reaktorgefäß besteht, welches vertikal und konsentrisch zueinander angeordnet einen äußeren Mantel und ein inneres Strömungsleitrohr aufweist. Sofern es sich um besonders hoch belastetes Abwasser handelt und die Reinigung nicht ausreichend ist, wird die Reinigung in einer Doppelanlage durchgeführt. Hierbei wird das in dem ersten Reaktor behandelte Abwasser dem zweiten Reaktor zugeführt und dort in einer zweiten Stufe behandelt. Die Verwendung solcher Schlaufenreaktoren weist einige Vorteile auf. Zur Aufrechterhaltung der Schlaufenströmung bedarf es jedoch eines großen Leistungseintrags, wodurch der spezifische Energiebedarf bei solchen Anlagen relativ hoch ausfällt. Aus der FR-A-2326384 ist ferner bekannt, mittels einer Triebstrahldüse Abwasser zu belüften und in ein offenes Becken einzutragen. Triebstrahldüsen in Reaktoren zum Vermischen von Gasen und Flüssigkeiten zu verwenden, sind außerdem aus der DE-A-1557018 und der DE-A 27 05 243 bekannt.

Aufgabe der vorliegenden Erfindung ist es, eine Anlage zur aeroben biologischen Reinigung von schadstoffhaltigem Wasser zu schaffen, bei der die oben angeführten Nachteile vermieden werden und insbesondere Abwasser energie- und investitionssparend gereinigt werden kann. Die Anlage besteht aus einem in axialer Richtung durchströmten Submers-Reaktor und einem Sedimentationsbecken zur Abtrennung des Bioschlamms vom gereingten Wasser.

Die Aufgabe wird dadurch gelöst, daß der Reaktor ein einen zweistufigen Belebungsraum enthaltendes Rohr ist, das a) eine erste Belebungsstufe, in der am Anfang für die Dispersion der Luft und der Mikroorganismen in dem zu reinigenden Abwasser eine Treibstrahldüse angeordnet ist, und b) eine zweite Belebungsstufe, in der Einbauten zur gleichmäßigen Verteilung der Gasblasen und der Mikroorganismen sowie für deren Immobilisierung angeordnet sind, aufweist.

Der Reaktor kann als horizontal liegendes oder vertikal stehendes Gefäß betrieben werden. Ebenso sind andere Anordnungen möglich. Der Reaktor ist jedoch vorzugsweise als vertikal stehendes Gefäß ausgestaltet, in dessen unteren Teil die erste Belebungsstufe und in dessen oberen Teil die zweite Belebungsstufe liegt. Das Reaktionsgefäß ist ein geschlossenes Rohr, in dem zwischen den Belebungsstufen auch ein Sedimentationsbecken angeordnet sein kann. Für die Dispergierung der Luft und der Mikroorganismen ist am Anfang der ersten Stufe eine Treibstrahldüse angeordnet. Oberhalb der Treibstrahldüse befindet sich eine Luftzuleitung. Je nach Bedarf können oberhalb dieser Luftzuleitung weitere Luftzuleitungen angeordnet sein. Unterhalb der Treibstrahldüse befinden sich die Zuleitungen für das zu reinigende Abwasser und die rückgeführte Biomasse. In der zweiten Belebungsstufe sind Einbauten zur Immobilisierung der Mikroorganismen vorhanden.

Aufgabe der Erfindung ist es ferner, ein Verfahren zur aeroben biologischen Reinigung von schadstoffhaltigem Wasser zur Verfügung zu stellen.

Diese Aufgabe wird dadurch gelöst, daß a) über eine Leitung das zu reinigende Abwasser dem einen zweistufigen Belebungsraum enthaltenden Rohrreaktor zugeführt, b) in der ersten Belebungsstufe Mikroorganismen und zugeführte Luft mittels einer am Anfang der Stufe angeordneten Treibstrahldüse in dem Abwasser sehr fein dispergiert werden, c) anschließend das Luft-Wasser-Mikroorganismen-Gemisch in der zweiten Stufe einer Nachbehandlung unterworfen wird, wobei durch die Einbauten Luftblasen, Mikroorganismen und Wasser gleichmäßig verteilt werden, und d) dann das Gemisch über ein Verbindungsrohr in ein Sedimentationsgefäß fließt, wo die Abtrennung der Mikroorganismen von dem gereinigten Wasser erfolgt.

Nach dem Durchströmen der ersten Belebungsstufe kann im Bedarfsfalle das Wasser/Gas/Organismen-Gemisch in ein Entgasungsrohr und die entgaste Flüssigkeit in ein Sedimentationsbecken geleitet werden. Die Luft wird oberhalb des Treibstrahls über eine Leitung zugeführt. Ggf. kann über zusätzliche Leitungen oberhalb der ersten Luftzuleitung weitere Luft zugeführt werden. Bei dem erfindungsgemäßen Verfahren werden in der ersten Belebungsstufe vorzugsweise die im Abwasser vorhandenen Kohlenwasserstoffverbindungen abgebaut und in der zweiten Belebungsstufe Stickstoffverbindungen entfernt.

Bei der erfindungsgemäßen Anlage sind somit im Gegensatz zum Stand der Technik die einen Freistrahlbereich umfassende Belebungsstufe für die nicht immobilisierten Mikroorganismen und die zwecks Immobilisierung der Mikroorganismen mit Einbauten versehene Festbettstufe in einem Reaktor untergebracht. Das Prinzip des geschilderten Verfahrens beruht infolgedessen darauf, daß die biologische Abwasserreinigung durch Begasung eines Biomasse-Wassergemischs in einem zweistufigen Belebungsraum, der in einem axial durchströmten Rohrreaktor untergebracht ist, erreicht wird. Hierbei werden kontinuierlich Abwasser, Biomasse und Luftmasse zugeführt und eine äquivalente Menge an Biomasse-Wassergemisch entnommen. In der ersten Stufe werden die zugeführte Luft und die rückgeführte Biomasse durch den Treibstrahl sehr fein im Abwasser dispergiert. In der zweiten Stufe wird durch Einbauten eine gleichmäßige Verteilung der Luftblasen und der Bakterienmasse im Abwasser aufrechterhalten. Durch die Bildung eines Mikroorganismenfilms auf den Einbauten wird eine hohe Bakterienkonzentration erreicht. Gleichzeitig wird der Schlammfall am Ende der zweiten Stufe verringert, so daß für das Sedimentationsbecken geringere Dimensionen vonnöten sind. Durch die intensive Vermischung und Belüftung mittels eines Treibstrahls ist normalerweise eine Zwischensedimentation vor dem Festbett entbehrlich, da hierdurch der Schlammanfall sich beträchtlich verringert. Ein Verstopfen der Kanäle zwischen den Einbauten kann somit in der erfindungsgemäßen Anlage nicht auftreten, obwohl zwischen beiden Stufen keine Sedimentationsstufe vorgesehen ist. Bei stark verschmutztem Abwasser kann es jedoch dennoch empfehlenswert sein, eine Zwischensedimentationsstufe einzubauen.

Es ist überraschend, daß mit dem Treibstrahl, der ein hohes Schergefälle in seinem Treibstrahlbereich erzeugt, die erfindungsgemäße Anlage betrieben werden kann ; denn der Fachmann mußte eine Schädigung der Mikroorganismen befürchten. Derartiges konnte jedoch erfindungsgemäß nicht beobachtet werden. Dadurch, daß die erste Belebungsstufe nicht vom Festbett getrennt ist, mußte man darüber hinaus annehmen, daß die immobilisierten Mikroorganismen sich wieder ablösen. Durch den Treibstrahl werden jedoch Gas und Organismen so fein dispergiert, daß es zu einer gleichmäßigen Verteilung des Gas/Wasser/Organismen-Gemisch im Festbett kommt. Im Gegensatz zum Stand der Technik besteht somit keine Gefahr, daß sich anaerobe Zonen bilden. Schließlich meinte man, daß bei einem fein dispergierten Organismengemisch es zu einer Verschlechterung des Sedimentationsverhaltens kommt. Aber auch diese Befürchtung bewahrheitet sich bei Einsatz der erfindungsgemäßen Anlage überraschenderweise nicht.

Eine weitere Besonderheit der erfindungsgemäßen Anlage besteht darin, daß der zweistufige Reaktor sowohl als kleine Kompaktanlage als auch als großvolumiges Gefäß betrieben werden kann. Insbesondere bei dem Einsatz als Kleinanlage erweist es sich als Vorteil, daß der Reaktor jede beliebige Lage einnehmen kann ; denn hierdurch ist eine Unterbringung auch bei schwierigen räumlichen Verhältnissen möglich. Durch die Ausführung des Reaktors als geschlossenes Rohr werden zudem Geruchsbelästigungen ausgeschlossen.

Die erfindungsgemäßen Anlagen sind in den Figuren 1, 2, 3 und 4 dargestellt.

In Figur 1 ist eine Anlage mit einem vertikal stehenden Reaktor dargestellt.

In Figur 2 ist eine Anlage dargestellt, in der der Reaktor als horizontal liegendes Rohr ausgestaltet ist.

In Figur 3 ist eine Anlage dargestellt, bei der zwischen den Belebungsstufen ein Sedimentationsbecken angeordnet ist.

In Figur 4 ist die Anlage dargestellt, in der der Reaktor mit zwischengeschalteten Sedimentationsbecken als liegendes Rohr ausgestaltet ist.

Nachfolgend wird die Erfindung anhand der Figuren, die einen schematischen Aufbau zum Durchführen des erfindungsgemäßen Verfahrens in beispielhafter Ausführung zeigen, näher erläutert:

Das zu reinigende Abwasser wird über die Leitung 1 gemeinsam mit der zurückgeführten Biomasse 2 in den zweistufigen Belebungsraum umfassenden Reaktor 3 eingeleitet. Die Luft wird über die Leitung 4 der Begasungsdüse 5 und den Zusatzdüse 6 zugeführt. Der Treibstrahl 7 erzeugt in seinem Freistrahlbereich ein hohes Schergefälle, wodurch die zugeführte Luft und der Bioschlamm sehr fein dispergiert werden. Nach Durchströmen der ersten Stufe 8 tritt das Luft-Biomasse-Wassergemisch in die zweite, mit Einbauten 9 versehene Stufen 10 ein. Durch die Einbauten wird eine weitgehend gleichmäßige Verteilung von Luftblasen, Biomasse und Abwasser über den Strömungsquerschnitt der zweiten Stufe erreicht. Außerdem bildet sich auf der Oberfläche der Einbauten ein Mikroorganismenfilm aus, durch den die Konzentration an Mikroorganismen stark erhöht wird. Die Einbauten können aus einer Partikelschüttung bestehen. Beispielsweise können Aktivkohlekörner, Glasschwammringe hoher Porösität oder eine geordnete oder ungeordnete Packung mit einer großen volumenbezogenen Oberfläche in Betracht kommen. Ebenso ist es möglich, feste Einbauten vorzusehen.

Das Gemisch fließt von der zweiten Belebungsstufe über das Verbindungsrohr 11 in das Sedimentationsbecken 12 über, wo die Abtrennung des mikroorganismenhaltigen Schlamms von dem gereinigten Abwasser erfolgt. Das Abwasser verläßt das Sedimentationsbecken über die Leitung 13, während der abgesetzte Bioschlamm in den Reaktor zurückgeführt oder über die Überschußschlammleitung 14 abgesogen wird. Die im Sedimentationsbecken ausgasende Luft wird über die Abluftleitung 15 abgeführt und ggf. mit einem Filter 16 gereinigt.

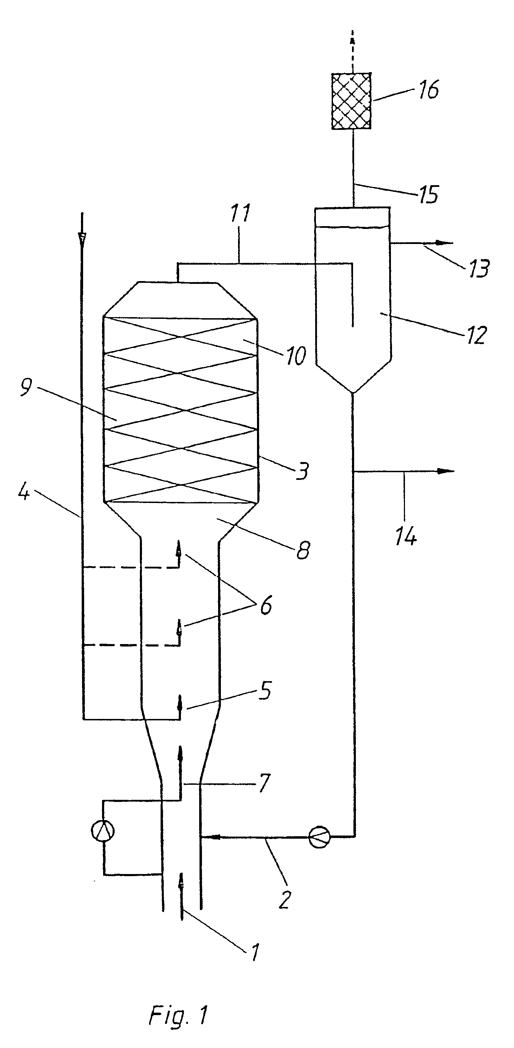

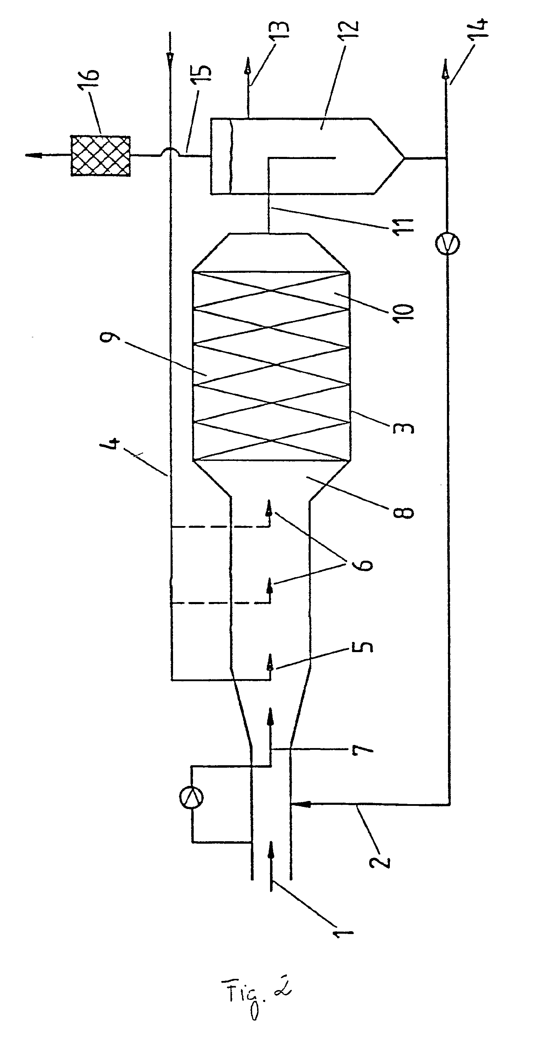

Das erfindungsgemäße Verfahren kann auch in einem liegenden Reaktor, wie er in Figur 2 dargestellt ist, durchgeführt werden. Der prinzipielle Aufbau gleicht dem der in Figur 1 dargestellten Anlage. Einziger Unterschied ist, daß statt des stehenden Rohrs ein liegendes Rohr eingesetzt wird. Es ist aber auch möglich, den Reaktor beispielsweise in Schräglage anzuordnen.

Nach der ersten Belebungsstufe kann bei einer notwendigen Trennung der Biozinosen eine Zwischensedimentation eingeschaltet werden. Dies ist besonders dann erforderlich, wenn in der zweiten Stufe Stickstoffverbindungen entfernt werden sollen. Hierbei wird das Wasser/Gas/Organismen-Gemisch durch eine Prallplatte 8a umgelenkt und in ein Entgasungsrohr 8b geleitet. Das Gas kann von dort in das Festbett entweichen, während das Flüssigkeit/Organismen-Gemisch in das Sedimentationbecken 8c gelangt, wo der Schlamm mit den Mikroorganismen sedimentiert. Zugleich gelangt das abgetrennte Gas durch eine Öffnung 8e in die zweite Belebungsstufe. Die Öffnung 8e kann im einfachsten Fall als konischer Mantel ausgebildet sein. Darüber hinaus kann die Öffnung auch mit Einbauten versehen sein, z.B. mit Siebplatten, gelochten Platten. Die Mikroorganismen können gewünschtenfalls über die Leitung 8d zumindest teilweise in die Rückführung 2 fließen. Ebenso ist auch eine vollständige Ausschleusung des Schlamms aus dem Prozeß möglich.

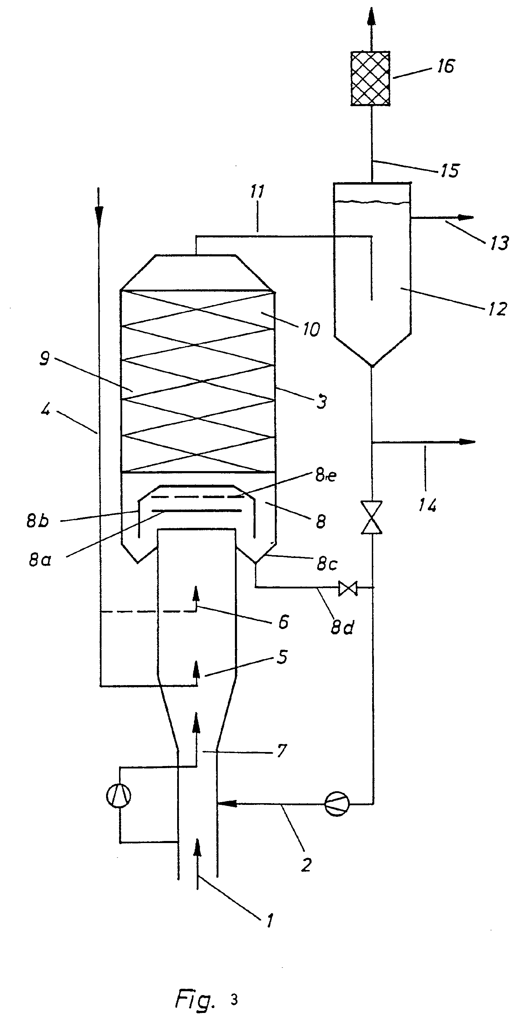

Das Sedimentationsbecken 8c kann im Falle des vertikal stehenden Rohrs als Ringkanal ausgestaltet sein, welcher die Rohraußenwand der ersten Belebungsstufe 10 an ihrem oberen Ende umschließt (Figur 3). Zweckmäßigerweise ist der Ringkanal in seinem Querschnitt trichterförmig ausgestaltet, so daß sich in der Trichterspitze der Schlamm sammelt.

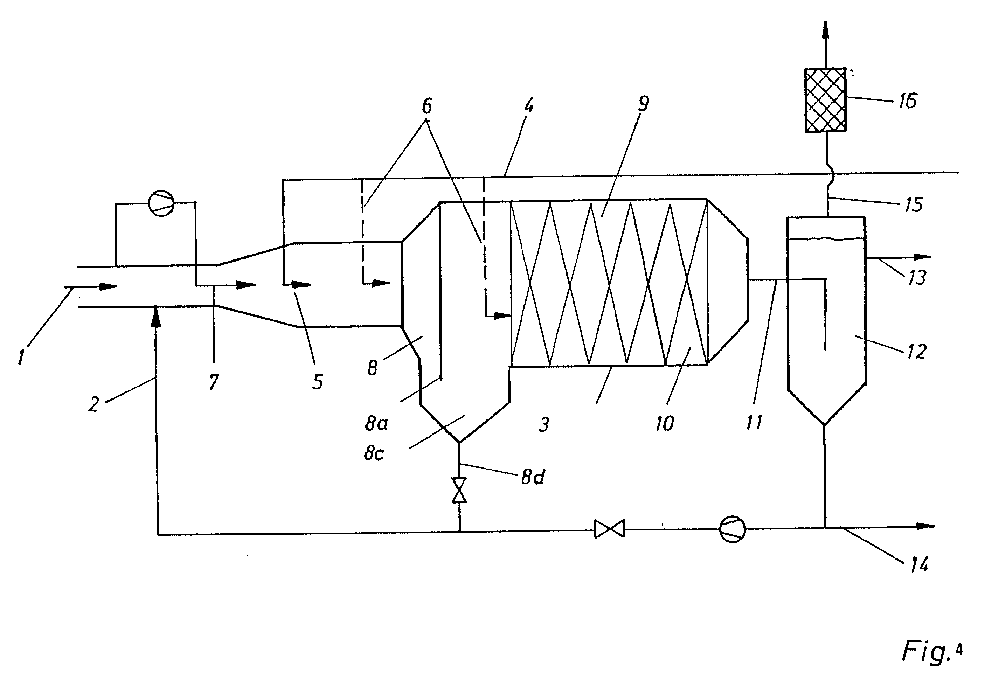

Bei liegender Anordnung oder Ausführung in Schräglage kann zwischen den beiden Belebungsstufen an der nach unten weisenden Seite des Rohrs eine Ausbuchtung zwecks Sedimentation angebracht sein. Auch diese ist zweckmäßigerweise trichterförmig ausgestaltet (Figur 4). Schließlich kann zwischen Prallelplatte 8a und Festbett 9 eine zusätzliche Belüftung 6 vorgesehen werden.

Für das erfindungsgemäße Verfahren wird grundsätzlich atmosphärische Luft verwendet. Stattdessen kann aber auch mit Sauerstoff angereicherte Luft oder reiner Sauerstoff zugeführt werden. Das erfindungsgemäße Verfahren eignet sich für die üblichen Haushalts- und Industrieabwässer. Insbesondere können mit chlorierten Kohlenwasserstoffen verseuchtes Grundwasser und phenolhaltiges Kokereiabwasser gereinigt werden.

## Ansprüche

1. Anlage zur aeroben biologischen Reinigung von schadstoffhaltigem Wasser bestehend aus einem in axialer Richtung durchströmten Submers-Reaktor und einem diesem nachgeschalteten Sedimentationsgefäß zur Abtrennung des Bioschlamms vom gereinigten Wasser, **dadurch gekennzeichnet**, daß der Reaktor ein einen zweistufigen Belebungsraum enthaltendes Rohr ist, das

 a) eine erste Belebungsstufe (8), in der am Anfang für die Dispersion der Luft und der Mikroorganismen in dem zu reinigenden Abwasser eine Treibstrahldüse (7) angeordnet ist, und

 b) eine zweite Belebungsstufe (10), in der Einbauten zur gleichmäßigen Verteilung der Gasblasen und der Mikroorganismen sowie für deren Immobilisierung angeordnet sind, aufweist.

2. Anlage nach Anspruch 1, **dadurch gekennzeichnet,** daß der Reaktor ein vertikal stehendes Rohr ist, in dessen unterem Teil die erste Belebungsstufe (8) und in dessen oberem Teil die zweite Belebungsstufe (10) liegt.

3. Anlage nach einem der Ansprüche 1 bis 2, **dadurch gekennzeichnet,** daß zwischen den Belebungsstufen (8, 10) ein Sedimentationsbecken (8c) angeordnet ist.

4. Anlage nach einem der Ansprüche 1 bis 3, **dadurch gekennzeichnet,** daß oberhalb der Treibstrahldüse (7) eine Luftzuleitung (5) angeordnet ist.

5. Anlage nach einem der Ansprüche 1 bis 4, **dadurch gekennzeichnet,** daß oberhalb der Luftzuleitung (5) weitere Luftzuleitungen (6) angeordnet sind.

6. Anlage nach einem der Ansprüche 3 bis 5, **dadurch gekennzeichnet,** daß unterhalb der Treibstrahldüse (7) Zuleitungen für das zu reinigende Abwasser (1) und für die rückgeführte Biomasse (2) angeordnet sind.

7. Anlage nach einem der Ansprüche 1 bis 6, .**dadurch gekennzeichnet,** daß in der zweiten Belebungsstufe feste Einbauten zur Immobilisierung der Mikroorganismen vorhanden sind.

8. Anlage nach Anspruch 7, **dadurch gekennzeichnet,** daß in der zweiten Belebungsstufe eine Partikelschüttung zur Immobilisierung der Mikroorganismen vorhanden ist.

9. Anlage nach Anspruch 8, **dadurch gekennzeichnet,** daß die Partikelschüttung aus Aktivkohlekörnern, Glasschwammringen hoher Porösität, Füllkörpern oder einer geordneten oder ungeordneten Packung mit einer großen volumenbezogenen Oberfläche besteht.

10. Anlage nach einem der Ansprüche 1 und 3 bis 9, **dadurch gekennzeichnet,** daß der Reaktor als horizontal liegendes Rohr ausgestaltet ist.

11. Verfahren zur aeroben biologischen Reinigung von schadstoffhaltigem Wasser in einer Anlage gemäß einem der Ansprüche 1 bis 10, **dadurch gekennzeichnet,** daß

a) über eine Leitung (1) das zu reinigende Abwasser dem einen zweistufigen Belebungsraum enthaltenden Rohrreaktor zugeführt,

b) in der ersten Belebungsstufe (8) Mikroorganismen und zugeführte Luft mittels einer am Anfang der Stufe angeordneten Treibstrahldüse (7) in dem Abwasser sehr fein dispergiert werden,

c) anschließend das Luft-Wasser-Mikroorganismen-Gemisch in der zweiten Stufe einer Nachbehandlung unterworfen wird, wobei durch die Einbauten Luftblasen, Mikroorganismen und Wasser gleichmäßig verteilt werden, und

d) dann das Gemisch über ein Verbindungsrohr (11) in ein Sedimentationsgefäß (12) fließt, wo die Abtrennung der Mikroorganismen von dem gereinigten Wasser erfolgt.

12. Verfahren nach Anspruch 11, **dadurch gekennzeichnet,** daß nach Durchströmen der ersten Belebungsstufe das Abwasser/Gas/Mikroorganismengemisch durch eine Prallplatte (8a) in ein Entgasungsrohr (8b) umgelenkt und entgaste Flüssigkeit in ein Sedimentierbecken (8c) zur Abtrennung der Sedimentiermasse geleitet wird, während das Gas durch eine Öffnung (8e) in die zweite Belebungsstufe (10) entweicht.

13. Verfahren nach Anspruch 12, **dadurch gekennzeichnet,** daß Schlamm aus dem Sedimentierbecken (8c) über eine Leitung (8d) in die Rückführung (2) geleitet wird.

14. Verfahren nach einem der Ansprüche 11 bis 13, **dadurch gekennzeichnet,** daß die Luft oberhalb des Treibstrahls (7) über eine Leitung (5) zugeführt wird.

15. Verfahren nach einem der Ansprüche 12 bis 14, **dadurch gekennzeichnet,** daß Luft über zusätzliche Leitungen (6) oberhalb der ersten Luftzuleitung (5) zugeführt wird.

16. Verfahren nach einem der Ansprüche 10 bis 15, **dadurch gekennzeichnet,** daß in der ersten Belebungsstufe die im Abwasser vorhandenen Kohlenwasserstoffverbindungen abgebaut und in der zweiten Belebungsstufe Stickstoffverbindungen entfernt werden.

17. Verfahren nach einem der Ansprüche 10 bis 16, **dadurch gekennzeichnet,** daß aus der Sedimentationsstufe Mikroorganismen über eine Leitung (2) zur ersten Belebungsstufe des Reaktors zurückgeführt werden.

**Claims**

1. An apparatus for the aerobic biological purification of water containing harmful substances comprising a submersion reactor where the flow is headed in the axial direction and a settling vessel positioned downstream of said submersion reactor, said vessel having the purpose of separating the biological sludge from the purified water, <u>characterised in</u> that the reactor is a pipe containing a two-stage activation chamber, said pipe comprising

a) a first activation chamber (8) at the beginning of which there is positioned a propulsion jet nozzle (7) for dispersing the air and the microorganisms in the waste water to be purified and

b) a second activation chamber (10) wherein there are positioned fixed devices for the even distribution of the gas bubbles and the microorganisms as well as for the immobilisation thereof.

2. An apparatus according to claim 1, <u>characterised in</u> that the reactor is a vertically upright pipe in the lower part of which there is positioned the first activation chamber (8) and in the upper part of which there is positioned the second activation chamber (10).

3. An apparatus according to any of the claims 1 and 2, characterised in that a settling basin (8c) is positioned between the activation chambers (8, 10).

4. An apparatus according to any of the claims 1 to 3, characterised in that an air inlet (5) is positioned above the propulsion jet nozzle (7).

5. An apparatus according to any of the claims 1 to 4, characterised in that additional air inlets (6) are positioned above the air inlet (5).

6. An apparatus according to any of the claims 3 to 5, characterised in that inlets for the waste water to be purified (1) and for the recycled biological matter (2) are positioned below the propulsion jet nozzle (7).

7. An apparatus according to any of the claims 1 to 6, characterised in that fixed devices for immobilising the micro-organisms are present in the second activation chamber.

8. An apparatus according to claim 7, characterised in that bulk particles for immobilising the micro-organisms are present in the second activation chamber.

9. An apparatus according to claim 8, characterised in that the bulk particles consist of active coal granules, highly porous glass sponge rings, filling bodies or an arranged or unarranged package having a large surface/volume ratio.

10. An apparatus according to any of the claims 1 and 3 to 9 characterised in that the reactor is designed as a horizontally lying pipe.

11. A process for the aerobic biological purification of water containing harmful substances in an apparatus according to any of the claims 1 to 10, characterised in that

a) the waste water to be purified is directed to the pipe reactor containing a two-stage activation chamber via an inlet (1),

b) in the first activation chamber (8), micro-organisms and the fed air are dispersed very finely in the waste water by means of a propulsion jet nozzle (7) positioned at the entrance of the chamber,

c) the mixture of air, water and micro-organisms is then subjected to aftertreatment in the second chamber where the air bubbles, the micro-organisms and the water are evenly distributed by the fixed devices, and

d) the mixture then flows via a connecting pipe (11) to a settling vessel (12) where separation of the micro-organisms from the purified water takes place.

12. A process according to claim 11, characterised in that the mixture of waste water, gas and micro-organisms, having flowed through the first activation chamber, is deflected to a degassing pipe (8b) via a baffle plate (8a) and degassed liquid is directed to a settling basin (8c) for separation of the settled matter, while the gas escapes to the second activation chamber (10) through an opening (8e).

13. A process according to claim 12, characterised in that sludge from the settling basin (8c) is directed to the feedback (2) via a conduit (8d).

14. A process according to any of the claims 11 to 13, characterised in that the air is fed in via an inlet (5) above the propulsion jet nozzle (7).

15. A process according to any of the claims 12 to 14, characterised in that air is fed in through additional air inlets (6) above the first air inlet (5).

16. A process according to any of the claims 10 to 15, characterised in that any hydrocarbon compounds present in the waste water are decomposed in the first activation chamber and nitrogen compounds are removed in the second activation chamber.

17. A process according to any of the claims 10 to 16, characterised in that micro-organisms are recycled from the settling stage to the first activation chamber of the reactor via a conduit (2).

## Revendications

1. Construction pour la purification aérobe-biologique de l'eau contetante du polluant, qui est composée d'un réacteur submersible traversé en direction axiale et un récipient de sédiments installé derrière pour séparer la boue biologique de l'eau purifiée, caractérisée en ce que le réacteur est un roseau, qui contient une place d'animation en deux degrés et qui présente

a) un premier degré (8) d'animation, dans lequel est mis en rang au début un éjecteur (7) pour la dispersion de l'air et des micro-organismes dans l'eau à purifier, et

b) un deuxième degré d'animation (10), dans lequel sont mis en rang des installations pour distribuer homogènement les soufflures et les micro-organismes, qui doivent être immobilisés.

2. Construction selon la revendication 1, caractérisée en ce que le réacteur est un roseau en position verticale contenant enbas le premier degré d'animation (8) et au-dessus le deuxième degré d'animation (10).

3. Construction selon d'une des revendications 1 a 2, caractérisée en ce qu' un bassin de sédimentation se trouve entre les degrés d'animation (8, 10).

4. Construction selon d'une des revendications 1 a 3, caractérisée en ce qu' une adduction pour l'air (5) est mis en rang au-dessus de l'éjecteur (7).

5. Construction selon d'une des revendications 1 a 4, caractérisée en ce que d'autres adductions pour l'air (6) sont mis en rang au-dessus de l'adduction pour l'air (5).

6. Construction selon les revendications 3 a 5, caractérisée en ce que des adductions pour l'eau à purifier (1) et pour la biomasse (2), qui a été reconduite, sont mis en rang au-dessous de l'éjecteur (7).

7. Construction selon les revendications 1 a 6, caractérisée en ce que des installations fermes pour l'immobilisation des micro-organismes se trouvent dans le deuxième degré d'animation.

8. Construction selon la revendication 7, caractérisée en ce qu'un emmagasinage des particules pour l'animation des micro-organismes se trouve dans le deuxième degré d'animation.

9. Construction selon la revendication 8, caractérisée en ce que l'emmagasinage des particules se compose de granules a charbon activé ou des bagues de l'éponge de verre très poreuse ou de la matière de remplissage ou d'une paquet reglée ou en désordre avec une surface vaste relative au volume.

10. Construction selon les revendications 1 et 3 a 9, caractérisée en ce que le réacteur est construit comme un roseau placé horizontalement.

11. Procédé pour purifier aérobement et biologiquement de l'eau contenante du polluant dans une construction selon une des revendications 1 a 10, ·caractérisé en ce que

    a) l'eau à purifier est conduite au réjecteur à tuyeau, qui contient l'espace d'animation en deux degrés,

    b) des micro-organismes et de l'air conduit sont dispergés ténu dans le premier degré d'animation (8) à l'aide d'un réjecteur (7) au début du degré, qui est placé dans l'eau résiduaire,

    c) ensuite le mélange de l'air et de l'eau et des micro-organismes est soumis à un traitement ultérieur dans le deuxième degré en distribuant également les bulles d'air et les micro-organismes et l'eau à l'aide des installations, et puis

    d) le mélange coule dans le récipient de sédimentation (12) au-dessus un tuyeau de communication (11) ou se passe la séparation des micro-organismes de l'eau purifiée.

12. Procédé selon la revendication 11, caractérisé en ce que le mélange de l'eau résiduaire et du gaz et des micro-organismes est dirigé dans un tuyeau a dégazer (8b) à travers une plaque (8a) (Prallplatte) après avoir traversé le premier degré d'animation et le liquide dégazé est dirigé dans un bassin de sédimentation (8c) pour séparer la masse des sédiments, tandis que le gaz s'échappe à travers une ouverture (8e) dans le deuxième degré (10).

13. Procédé selon la revendication 12, caractérisé en ce que de la boue est dirigée du bassin de sédimentation (8c) sur une conduite (8d) dans le guide reconduisant (2).

14. Procédé selon les revendications 11 a 13, caractérisé en ce que l'air est dirigé sur une conduite (5) au-dessus de la propulsion par réaction (7).

15. Procédé selon les revendications 12 a 14, caractérisé en ce que l'air est dirigé sur d'autres conduites (6) au-dessus de la première conduite de l'air (5).

16. Procédé selon les revendications 10 a 15, caractérisé en ce que les connexions de carbone d'hydrogène, qui se trouvent dans les eaux résiduaires du premier degré, sont exploitées et des connexions de l'azote dans le deuxième degré d'animation sont écartées.

17. Procédé selon les revendications 10 a 16, caractérisé en ce que des micro-organismes sont reconduits du degré de sédimentation au-dessus une conduite (2) au premier degré d'animation du réacteur.

*Fig. 1*

Fig. 2

EP 0 306 054 B1

*Fig.* 3

Fig. 4